# EUROPEAN PATENT SPECIFICATION

(11) **EP 3 377 683 B1**
(45) Date of publication and mention of the grant of the patent: **01.09.2021**
(21) Application number: 16816776.5
(22) Date of filing: 16.11.2016
(51) Int. Cl.: D01F 1/10, D01F 6/62, D06M 15/643

(54) **SYNTHETIC FIBER CONTAINING AEROGEL AND POLYMER MATERIAL, AND METHODS OF MAKING AND ARTICLES COMPRISING THE SAME**
SYNTHETISCHE FASER MIT AEROGEL UND POLYMERMATERIAL SOWIE VERFAHREN ZUR HERSTELLUNG UND ARTIKEL DAMIT
FIBRE SYNTHÉTIQUE CONTENANT UN AÉROGEL ET UN MATÉRIAU POLYMÈRE, AINSI QUE PROCÉDÉS DE FABRICATION DE CETTE DERNIÈRE ET ARTICLES LA COMPRENANT

(30) Priority: 17.11.2015 US 201562256374 P
(43) Date of publication of application: 26.09.2018
(73) Proprietor: PrimaLoft, Inc., Latham, NY 12110 (US)
(72) Inventor: DEMPSEY, Robert R., Latham, New York 12110 (US)
(74) Representative: Cabinet Laurent & Charras
(86) International application number: PCT/US2016/062261
(87) International publication number: WO 2017/087511

(56) References cited:
- WO-A1-2014/135585
- CN-A- 103 388 193
- GB-A- 759 374

## Description

### FIELD OF THE INVENTION

The present invention generally relates to synthetic fiber comprising polymer material and aerogel particles, to insulation comprising the synthetic fiber, to articles comprising the synthetic fiber, and to methods of forming the synthetic fiber.

### BACKGROUND OF THE INVENTION

The desirability and effectiveness of insulation materials and articles comprising insulation materials are highly dependent upon, e.g., the properties of fibers used to make the insulation. Fibers have different physical properties depending on, *inter alia,* their nature and composition. For example, natural fibers such as wool fibers have different properties from polymeric fibers, and polymeric fibers have different properties depending upon the polymer(s) from which they are made. Keeping fiber denier constant, improvements in an article's thermal properties have often come at the expense of added overall weight and/or bulkiness of an article.

CN 103 388 193 discloses aerogel-modified synthetic fibers.

Despite various advances in the textile field, a need remains for insulation materials with improved thermal properties, and, particularly, for fibers that, when incorporated into articles and insulation materials, offer improved thermal performance without added weight.

While certain aspects of conventional technologies have been discussed to facilitate disclosure of the invention, Applicant in no way disclaims these technical aspects, and it is contemplated that the claimed invention may encompass one or more conventional technical aspects.

In this specification, where a document, act or item of knowledge is referred to or discussed, this reference or discussion is not an admission that the document, act or item of knowledge or any combination thereof was, at the priority date, publicly available, known to the public, part of common general knowledge, or otherwise constitutes prior art under the applicable statutory provisions; or is known to be relevant to an attempt to solve any problem with which this specification is concerned.

### SUMMARY OF THE INVENTION

Briefly, the present invention satisfies the need for improved fiber with beneficial thermal properties. In various embodiments, the inventive fiber lends itself toward use in insulation that demonstrates improved thermal properties without undesirably increasing the weight of the insulation.

The present invention may address one or more of the problems and deficiencies of the art discussed above. However, it is contemplated that the invention may prove useful in addressing other problems and deficiencies in a number of technical areas. Therefore, the claimed invention should not necessarily be construed as limited to addressing any of the particular problems or deficiencies discussed herein.

In a first aspect, the invention provides a synthetic fiber comprising a mixture containing:
- 0.1 to 2.7 wt % aerogel particles, said aerogel particles having an average diameter of 1 to 12 µm; and
- 85 to 99.9 wt % polymer material,
wherein the synthetic fiber has a denier of 0.1 to 9.0.

In a second aspect, the invention provides insulation material comprising the synthetic fiber.

In a third aspect, the invention provides an article comprising the synthetic fiber of the first aspect of the invention, or the insulation material of the second aspect of the invention.

In a fourth aspect, the invention provides a method of making the synthetic fiber or an article comprising the synthetic fiber (e.g., clothing, insulation material, etc.), said method comprising:
- mixing the aerogel particles and the polymer material, thereby forming an aerogel/polymer mixture;
- extruding the aerogel/polymer mixture; and
- optionally performing one or more additional processing steps,
thereby forming the synthetic fiber or article.

Certain embodiments of the presently-disclosed synthetic fiber, insulation and articles comprising the synthetic fiber, and methods of making the synthetic fiber have several features, no single one of which is solely responsible for their desirable attributes. Without limiting the scope of the synthetic fiber, insulation, articles, and methods as defined by the claims that follow, their more prominent features will now be discussed briefly. After considering this discussion, and particularly after reading the section of this specification entitled "Detailed Description of the Invention," one will understand how the features of the various embodiments disclosed herein provide a number of advantages over the current state of the art. For example, in some embodiments, the synthetic fiber provides improved thermal properties even in lightweight applications, thereby lending itself toward advantageous use in, for example, yarn, woven and nonwoven insulation materials, and articles (e.g., apparel, footwear, bedding and industrial fabrics). Embodiments of the synthetic fiber may offer low density construction, improved thermal performance, and/or improved acoustical resistance suitable for use in, *inter alia,* making yarns and insulation for apparel and industrial fabrics, and in making other articles that have insulative demands.

These and other features and advantages of this invention will become apparent from the following detailed description of the various aspects of the invention taken in conjunction with the appended claims and the accompanying drawings.

### BRIEF DESCRIPTION OF THE DRAWINGS

The present invention will hereinafter be described in conjunction with the following drawing figures, which are not necessarily drawn to scale for ease of understanding, wherein the same reference numerals retain their designation and meaning for the same or like elements throughout the various drawings, and wherein:
FIG. 1 is a side perspective view of a container with a polymer materialaccording to certain embodiments of the present disclosure;
FIG. 2 is a side perspective view of a container with aerogel particles according to certain embodiments of the present disclosure;
FIG. 3 is a side perspective view of the container of FIG. 1 with the aerogel particles mixed into the polymer material according to certain embodiments of the present disclosure;
FIG. 4 is an enlarged view of a synthetic fiber containing aerogel particles according to certain embodiments of the present disclosure;
FIG. 5 is a view of a polymer pellet containing aerogel particles according to certain embodiments of the present disclosure; and
FIG. 6 is an enlarged, cross sectional view of the pellet of FIG. 5 taken along line 6--6 according to certain embodiments of the present disclosure.

### DETAILED DESCRIPTION OF THE INVENTION

Aspects of the present invention and certain features, advantages, and details thereof, are explained more fully below with reference to the non-limiting embodiments illustrated in the accompanying drawings. Descriptions of well-known materials, fabrication tools, processing techniques, etc., are omitted so as to not unnecessarily obscure the invention in detail. It should be understood, however, that the detailed description and the specific example(s), while indicating embodiments of the invention, are given by way of illustration only, and are not by way of limitation. Various substitutions, modifications, additions and/or arrangements within the spirit and/or scope of the underlying inventive concepts will be apparent to those skilled in the art from this disclosure.

Aerogels, which have been called "solid smoke," are extremely light solids - in fact, they represent the lightest solids known to man. Aerogels have good thermal and acoustical insulating properties. However, the potential for use of aerogels in finished products/articles (particularly those having dynamic, non-rigid uses) is highly limited by the fragility and friability of aerogels- they break and tend to crumble and dust easily, and thus aerogel solids do not hold up well for many uses.

As aerogels tend to be fragile, various endeavors have been made to improve the properties of aerogel substrates. For example, US 2006/0093808 explains that untreated aerogels lack mechanical strength. The publication describes a method of depositing an aerogel substrate, then covering the surface of the aerogel substrate with a uniform polymer layer, which forms a polymer-coated aerogel substrate, thereby increasing the compressive modulus (and thus the integrity) of the aerogel, which helps to prevent fragments from breaking from the aerogel body.

US 2010/0279044 describes the blending of aerogel particles in thermoplastic polymer to improve physical properties, for use in seals, gaskets, pipes, tubes, or containers.

While previous efforts have affected the usability of solid aerogel substrates, or have provided for ways of incorporating aerogel into strong, solid thermoplastic seals, gaskets, etc., to date, success has yet to be achieved for incorporating aerogel into other useful applications that have entirely different complexities.

Since aerogels have good insulative characteristics, it could be beneficial to encapsulate them into aerogel-containing fabrics to prevent the discharge of dust. However, once aerogel-containing fabrics are encapsulated, the breathability of the fabric is severely reduced (sometimes to zero) and a significant amount of weight is added, thereby limiting the actual benefit of any such insulation.

The present invention addresses the above and other problems by integrating small aerogel particles into polymer material prior to making, for example, fabrics, insulation, articles, etc. This is done in the form of an aerogel-comprising synthetic fiber. Insulation and articles formed from the synthetic fiber may have, for example, overall improved thermal properties without unduly inhibiting breathability. In some embodiments, insulation and articles comprising the synthetic fiber have improved thermal properties without undesirably increased weight.

In a first aspect, the invention provides a synthetic fiber comprising:
- 0.1 to 2.7 wt % aerogel particles, said aerogel particles having an average diameter of 0.3 to 20 µm; and
- 85 to 99.9 wt % polymer material,
wherein the synthetic fiber has a denier of 0.1 to 9.0.

Denier is a unit of measure defined as the weight in grams of 9000 meters of a fiber or yarn. It is a common way to specify the weight (or size) of the fiber or yarn. For example, polyester fibers that are 1.0 denier typically have a diameter of approximately 10 micrometers. Micro-denier fibers are those having a denier of 1.0 or less, while macro-denier fibers have a denier greater than 1.0.

The denier of the synthetic fiber is 0.1 to 9.0, including any and all ranges and subranges therein (e.g., 0.7 to 2.0). For example, in some embodiments, the synthetic fiber has a denier of 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, or 9.0,.

The synthetic fiber comprises 0.1 to 2.7 wt % aerogel particles, including any and all ranges and subranges therein, said aerogel particles having an average diameter of 1 to 12 µm, including any and all ranges and subranges therein (e.g., 0.8 to 2 µm).

In some embodiments, the synthetic fiber comprises 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7 weight percent aerogel particles, including any and all ranges and subranges therein.

Within the limits of 0.1 to 2.7 wt% of aerogel particles content, in some embodiments, the synthetic fiber comprises 2 to 70 vol. % aerogel particles (e.g., 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 vol. %), including any and all ranges and subranges therein (e.g., 8-60 vol.%, 10-50 vol. %, etc.).

In some embodiments, the aerogel particles have an average diameter of 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4, 7.5, 7.6, 7.7, 7.8, 7.9, 8.0, 8.1, 8.2, 8.3, 8.4, 8.5, 8.6, 8.7, 8.8, 8.9, 9.0, 9.1, 9.2, 9.3, 9.4, 9.5, 9.6, 9.7, 9.8, 9.9, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0 µm, including any and all ranges and subranges therein.

As used herein, the term "aerogel" refers to a member of a group of unique materials that are synthetic porous ultralight materials derived from a gel in which the liquid part of the gel is replaced with a gas. "Aerogel particles" are particles of aerogel having the indicated size.

Aerogels are well-known in the art, and aerogels are commercially available. It is contemplated that any art-accepted aerogel may be used in connection with the present invention.

Aerogel preparation methods are also well-known in the art. An aerogel is generally produced by drying a suitable gel. Generally, a gel is prepared, forming a three-dimensional microstructure. For example, a gel may be prepared by, e.g., by the aggregation of colloidal particles, for example, under acidic conditions, to form a three dimensional gel microstructure. Aerogel forms when the gel is dried, or liquid is removed from the pores of the gel. Fluid can be removed via any suitable method that substantially preserves the gel microstructure. For example, the method of fluid removal can be supercritical fluid extraction, evaporation of liquid, or freeze-drying. The gel can be cast in particles to match a desired final aerogel particle size. More, typically, however, a large gel will be formed, the fluid removed from it to form a large aerogel, and then the large aerogel can be broken or otherwise processed into particles of a desired size.

The aerogel formation process may involve high pressures coupled with delicate temperature controls to allow a supercritical liquid to change places with the sol (i.e., liquid) in the gel. In such processes, as the pressure is carefully lowered, the supercritical liquid returns to a gas and dissipates into its environment leaving a very light solid structure containing many air-filled spaces where the sol was located.

In various embodiments of the present invention, pores in the aerogel particles are filled with air. In some embodiments, gas may be removed from the aerogel under vacuum.

Aerogel solid materials (the preserved gel microstructure that results following, e.g., the drying discussed above) are extremely light solids with low thermal conductivity. Aerogels have thermal and acoustical insulating properties.

As mentioned above, aerogels are commercially available from various sources. Aerogels prepared by supercritical fluid extraction or by subcritical drying are available from, e.g., Cabot Corporation, Aspen Aerogels, and American Aerogel.

Aerogels are generally inorganic, organic, or combinations thereof. Organic aerogels are derived from widely diverse starting materials, e.g. melamine formaldehyde. Inorganic aerogels generally comprise a colloidal component. Suitable colloidal components comprise an element including, but not necessarily limited to elements selected from the group consisting of silicon, aluminum, titanium, zirconium, tin, cerium, vanadium, hafnium, and mixtures thereof. Methods for producing inorganic aerogels are described in, e.g., H. D. Gesser, P. C. Goswarni, Chem Rev. 1989, 89, 765 et seq. The colloidal component (e.g., silicon dioxide (SiO₂), also known as silica) will differ depending upon the application.

In some embodiments, the aerogel particles used in the inventive synthetic fiber comprise inorganic aerogel. For example, in some embodiments, the aerogel particles comprise silica (SiO₂), alumina (Al₂O₃), or other metal oxides.

In some embodiments, the aerogel particles used in the inventive synthetic fiber comprise organic aerogel.

In some embodiments, the aerogel particles used herein have an average pore size of 1 to 200 nm. For example, in some embodiments, the average pore size is 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, or 200 nm, including any and all ranges and subranges therein (e.g., 10-50 nm, 15-30 nm, etc.).

In some embodiments, pores within aerogel particles comprised within the inventive synthetic fiber are at least partially filled with polymeric material. Applicant has found that some such embodiments result following extrusion of the inventive fiber.

In some embodiments, the aerogel particles used herein have an average density, of, e.g., from 1 mg/cc (i.e., mg/cm³) to 200 mg/cc. For example, in some embodiments, the average density of the aerogel particles is 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, or 200 mg/cc, including any and all ranges and subranges therein (e.g., 20-150 mg/cc, 30-100 mg/cc, 30-50 mg/cc, etc.).

The synthetic fiber comprises 85 to 99.9 weight % polymer material. For example, in some embodiments, the synthetic fiber comprises 85.0, 85.1, 85.2, 85.3, 85.4, 85.5, 85.6, 85.7, 85.8, 85.9, 86.0, 86.1, 86.2, 86.3, 86.4, 86.5, 86.6, 86.7, 86.8, 86.9, 87.0, 87.1, 87.2, 87.3, 87.4, 87.5, 87.6, 87.7, 87.8, 87.9, 88.0, 88.1, 88.2, 88.3, 88.4, 88.5, 88.6, 88.7, 88.8, 88.9, 89.0, 89.1, 89.2, 89.3, 89.4, 89.5, 89.6, 89.7, 89.8, 89.9, 90.0, 90.1, 90.2, 90.3, 90.4, 90.5, 90.6, 90.7, 90.8, 90.9, 91.0, 91.1, 91.2, 91.3, 91.4, 91.5, 91.6, 91.7, 91.8, 91.9, 92.0, 92.1, 92.2, 92.3, 92.4, 92.5, 92.6, 92.7, 92.8, 92.9, 93.0, 93.1, 93.2, 93.3, 93.4, 93.5, 93.6, 93.7, 93.8, 93.9, 94.0, 94.1, 94.2, 94.3, 94.4, 94.5, 94.6, 94.7, 94.8, 94.9, 95.0, 95.1, 95.2, 95.3, 95.4, 95.5, 95.6, 95.7, 95.8, 95.9, 96.0, 96.1, 96.2, 96.3, 96.4, 96.5, 96.6, 96.7, 96.8, 96.9, 97.0, 97.1, 97.2, 97.3, 97.4, 97.5, 97.6, 97.7, 97.8, 97.9, 98.0, 98.1, 98.2, 98.3, 98.4, 98.5, 98.6, 98.7, 98.8, 98.9, 99.0, 99.1, 99.2, 99.3, 99.4, 99.5, 99.6, 99.7, 99.8, or 99.9 wt % polymer material, including any and all ranges and subranges therein.

The polymer material used in the synthetic fiber comprises any desired polymer matrix within which the aerogel particles are held. For example, in some embodiments the polymer material is selected from polyester, nylon, acrylic, polylactide, olefin, acetate, aramid, lyocell, spandex, viscose, modal, and combinations thereof. In a particular embodiment, the polymer material comprises polyester.

In some embodiments, the synthetic fiber comprises polyester, wherein said polyester is selected from poly(ethylene terephthalate), poly(hexahydro-p-xylylene terephthalate), poly(butylene terephthalate), poly-1,4-cyclohexelyne dimethylene (PCDT) and terephthalate copolyesters in which at least 85 mole percent of the ester units are ethylene terephthalate or hexahydro-p-xylylene terephthalate units. In a particular embodiment, the polyester is polyethylene terephthalate.

In some embodiments, the polyester as described herein comprises recycled polyester fibers.

As used herein, thermal resistance refers to the temperature difference, at a steady state, between two defined surfaces of a material or combination of materials that induces a unit heat flow rate through a unit area. Thermal resistance may be designated by R.

As used herein, the term acoustic resistance refers to the obstruction or opposition of the flow or passage of energy and involves the dissipation of the energy through internal friction of a medium which transmits sound. Acoustic resistance is designated by Z.

Embodiments of the inventive synthetic fiber provide polymeric fibers within which aerogel particles are embedded in polymer material. In some embodiments, the aerogel particles are homogenously mixed within the polymer material, meaning, the mixture of polymer material and aerogel particles comprised within the synthetic fiber has a substantially uniform (i.e., 90 - 100% uniform, e.g., at least 90.0, 90.1, 90.2, 90.3, 90.4, 90.5, 90.6, 90.7, 90.8, 90.9, 91.0, 91.1, 91.2, 91.3, 91.4, 91.5, 91.6, 91.7, 91.8, 91.9, 92.0, 92.1, 92.2, 92.3, 92.4, 92.5, 92.6, 92.7, 92.8, 92.9, 93.0, 93.1, 93.2, 93.3, 93.4, 93.5, 93.6, 93.7, 93.8, 93.9, 94.0, 94.1, 94.2, 94.3, 94.4, 94.5, 94.6, 94.7, 94.8, 94.9, 95.0, 95.1, 95.2, 95.3, 95.4, 95.5, 95.6, 95.7, 95.8, 95.9, 96.0, 96.1, 96.2, 96.3, 96.4, 96.5, 96.6, 96.7, 96.8, 96.9, 97.0, 97.1, 97.2, 97.3, 97.4, 97.5, 97.6, 97.7, 97.8, 97.9, 98.0, 98.1, 98.2, 98.3, 98.4, 98.5, 98.6, 98.7, 98.8, 98.9, 99.0, 99.1, 99.2, 99.3, 99.4, 99.5, 99.6, 99.7, 99.8, or 99.9% uniform) composition.

Within the synthetic fiber, the aerogel particles may be, for example, completely or at least partially covered by the polymer material. In some embodiments, the majority of aerogel particles present (i.e., greater that 50 %, e.g., greater than 55, 60, 65, 70, or 75 %) are completely covered by the polymer material. In some embodiments, greater than 95% (e.g., at least 98%) of the aerogel particles within the fiber are completely covered by the polymer material.

In certain embodiments, the inventive synthetic fiber has a lower weight to volume ratio and/or better thermal insulating properties when compared to fibers having similar composition, but lacking the aerogel particles. For example, in some embodiments, insulation comprising the inventive synthetic fiber may have a thermal resistance of *R₃*, while comparative insulation differing only in that it lacks aerogel particles may have a thermal resistance of *R₄*, wherein *R₃* > *R₄.*

In some embodiments, the synthetic fiber is siliconized. The term "siliconized" means that the fiber is coated with a silicon-comprising composition (e.g., a silicone). Siliconization techniques are well known in the art, and are described, e.g., in U.S. Patent No. 3,454,422. The silicon-comprising composition may be applied using any method known in the art, e.g., spraying, mixing, dipping, padding, etc. The silicon-comprising (e.g., silicone) composition, which may include an organosiloxane or polysiloxane, bonds to an exterior portion of the fiber. In some embodiments, the silicone coating is a polysiloxane such as a methylhydrogenpolysiloxane, modified methylhydrogenpolysiloxane, polydimethylsiloxane, or amino modified dimethylpolysiloxane. As is known in the art, the silicon-comprising composition may be applied directly to the fiber, or may be diluted with a solvent as a solution or emulsion, e.g. an aqueous emulsion of a polysiloxane, prior to application. Following treatment, the coating may be dried and/or cured. As is known in the art, a catalyst may be used to accelerate the curing of the silicon-comprising composition (e.g., polysiloxane containing Si-H bonds) and, for convenience, may be added to a silicon-comprising composition emulsion, with the resultant combination being used to treat the synthetic fiber. Suitable catalysts include iron, cobalt, manganese, lead, zinc, and tin salts of carboxylic acids such as acetates, octanoates, naphthenates and oleates. In some embodiments, following siliconization, the fiber may be dried to remove residual solvent and then optionally heated to between 65° and 200° C to cure.

The synthetic fiber may be crimped or uncrimped. Various crimps, including spiral (i.e., helical) and standard crimp, are known in the art. The synthetic fiber may have any desired crimp.

In some embodiments, the synthetic fiber is a staple fiber (i.e., a fiber having a standardized length). For example, in some embodiments, the synthetic fiber is a staple fiber having a length of 5 to 120 mm (e.g., 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, or 120 mm), including any and all ranges and subranges therein (e.g., 8 to 85 mm). In some embodiments, the invention provides a plurality of staple fibers.

In some embodiments, the synthetic fiber is a filament. A filament is a single long threadlike continuous textile fiber/strand. Unlike staple fibers, which are of finite length, filaments are of indefinite length, and can run for yards (1 yd = 0.9144 m) or miles (1 mile = 1609.344 meters) (or e.g., where employed in yarn, can run the entire length of yarn). In some embodiments, the filament ranges in length from 12.7 cm (5 inches) to several miles, including any and all ranges and subranges therein. For example, in some embodiments, the filament may be at least 12.7 cm (5 inches) in length (e.g., at least 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 inches in length (1 inch = 2.54 cm), or any range or subrange therein). In some embodiments, the filaments may be at least 30.48 cm (1 foot) in length (e.g., at least 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, or 1000 feet in length (1 foot = 30.48 cm), or any range or subrange therein).

Filaments may be created by a process known as extrusion (which can also be called melt spinning). For example, in some embodiments, after mixing aerogel particles and polymer material, the resultant aerogel/polymer mixture may be extruded as an aerogel/polymer pellet. Subsequently, depending on desired aerogel loading, a plurality of pellets, including at least the aerogel/polymer pellet, may be extruded into fiber. For example, pellets can be extruded through well-known techniques, such as by bringing them to or beyond their melting point, thereby forming liquid aerogel/polymer mixture, then forcing the liquid aerogel/polymer mixture through a dye called a spinneret. The spinneret often has many small holes through which the liquid passes. The liquid polymer streams are cooled upon exiting the spinneret, resulting in long strands of continuous synthetic fibers. The extruded filaments may optionally be combined with those of another (e.g., an adjoining) spinneret to increase the number of filaments in a bundle. A bundle of filaments maybe drawn (stretched) to make each filament thinner, and may optionally be texturized, as described below.

Texturizing techniques may be performed on filament bundles (used, e.g., in yarn) to disrupt the parallelization of the filaments. Such techniques may serve, for example, to add bulk without adding weight, which can make the resultant yarn seem lighter in weight, have improved hand-feel (softness), appear more opaque, and/or have improved temperature insulating properties. While any art-acceptable texturizing processes may be employed, examples of texturizing processes conducive to use in the invention include crimping, looping, coiling, crinkling, twisting then untwisting and knitting then deknitting.

In some embodiments, the synthetic fiber does not comprise a lubricious additive, such as that disclosed in U.S. 3,324,060.

Persons having ordinary skill in the art will readily appreciate that there are many applications within which the inventive synthetic fiber may be advantageously employed. Indeed, embodiments of the synthetic fiber and insulation according to the invention find use in many different industries. Non-limiting examples include use in: textile fabrics, e.g., paper machine clothing (where the fiber could be used as, e.g., a monofilament); refrigerated trucks; pipelines (e.g., petrochemical pipelines); aerospace applications (e.g., aerospace insulation panels); cryogenic storage tanks; fuel cells; car batter (e.g., electric car battery) protection; any other fabric or insulative applications, etc.

In a second aspect, the invention provides insulation material comprising the synthetic fiber.

Persons having ordinary skill in the art will appreciate that the inventive fiber may generally be used in place of or in supplement to synthetic fiber used in any insulation material.

In some embodiments, the insulation material is fabric, fleece, a pad, blowable insulation material or batting. In some embodiments, the insulation material is textile insulation material (i.e., insulation material used in the textile field).

In some embodiments, the invention provides batting comprising the synthetic fiber. In some embodiments, the batting has a thickness of 1 mm to 160 mm (e.g., 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, or 160 mm), including any and all ranges and subranges therein. In some embodiments, the thickness is less than or equal to 40 mm, e.g., 2 to 40 mm. In some embodiments, the batting has a density of 1 to 10 kg/m³ (e.g., 1, 2, 3, 4, 5, 6, 7, 8, 9, or 10 kg/m³), including any and all ranges and subranges therein.

In some embodiments, the invention provides yarn comprising the synthetic fiber.

Clo (clo/oz/yd², 1 clo/oz/yd² = 0.0295 clo/g/m², 1 oz/yd² = 33.90 g/m²) is a unit used to measure the thermal resistance of clothing. A value of 1.0 clo is defined as the amount of insulation that allows a person at rest to maintain thermal equilibrium in an environment at 21°C (70°F) in a normally ventilated room (0.1 m/s air movement). Typically, above this temperature the person so dressed will sweat, whereas below this temperature the person will feel cold. Clothing and/or its components can be assigned a clo value. Higher clo indicates an article is warmer than another article with a comparatively lower clo.

Surprising, the Applicant has found that embodiments of insulation comprising the inventive synthetic fiber have unexpectedly improved thermal performance (higher clo) as compared to insulation embodiments that are identical, except that they lack aerogel particles.

In some embodiments, insulation comprising the synthetic fiber has a thermal performance rating of 0.80 clo/oz/yd² to 1.40 clo/oz/yd² (e.g., 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.0, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.30, 1.31, 1.32, 1.33, 1.34, 1.35, 1.36, 1.37, 1.38, 1.39, or 1.40 clo/oz/yd²), when tested according to ISO 11092, including any and all ranges and subranges therein (e.g., 0.90 to 1.3 clo/oz/yd², 1.0 to 1.25 clo/oz/yd², etc.) (1 clo/oz/yd² = 0.0295 clo/g/m², 1 oz/yd² = 33.90 g/m²). In some embodiments, the batting has a thermal performance rating of at least 1.0 clo/oz/yd² when tested according to ISO 11092.

In a third aspect, the invention provides an article comprising the synthetic fiber of the first aspect of the invention, or the insulation material of the second aspect of the invention. Non-limiting examples of such articles include, for example, footwear, outerwear (e.g. outerwear garments such as jackets, etc.), clothing, sleeping bags, bedding (e.g., comforters), etc.

In a fourth aspect, the invention provides a non-limiting method of making the synthetic fiber or an article comprising the synthetic fiber (e.g., clothing, insulation material, etc.), said method comprising:
- mixing the aerogel particles and the polymer material, thereby forming an aerogel/polymer mixture;
- extruding the aerogel/polymer mixture; and
- optionally performing one or more additional processing steps,
thereby forming the synthetic fiber or article.

In some embodiments, the process makes use of recycled aerogel waste (e.g., leftover aerogel from other production processes not discussed herein, e.g., during commercial aerogel processing). In some of such embodiments, the method may optionally include classifying the aerogel waste to remove as many contaminants as possible. Separating the contaminant materials from the aerogel can be done by classifying which groups the materials fall into based on their size. The classifying may include, for example, straining or filtering the aerogel waste to separate out the aerogel particles from the waste materials. In addition, the aerogel particles may be separated based on their sizes. The aerogel particles may be, for example, oxides, such as, quartz, titania, zirconia, silica, or other metal oxides, polymers, such as, resorcinol-, melamine-formaldehyde, or polyimide, carbon, such as, pyrolyzed polymers, and cellulose, starch, alginates, and the like. Once the contaminants are removed, the aerogel particles, for example, silica aerogel particles, may be milled down to particles of a desired size. Optionally, upon obtaining aerogel particles of a desired size, the particles may optionally be classified again to ensure that all of the aerogel particles (which may, in some embodiments, resemble a powder or dust) are smaller than the desired diameter for mixing with polymer material.

Alternatively, the method may include, for example, obtaining clean aerogel particles. The aerogel particles may be, for example, oxides, such as, quartz, titania, zirconia, silica, or other metal oxides, polymers, such as, resorcinol-, melamine-formaldehyde, or polyimide, carbon, such as, pyrolyzed polymers, and cellulose, starch, alginates, and the like.

In some embodiments, the method of making the synthetic fiber or an article comprising the synthetic fiber comprises reducing particle size of the aerogel particles to a desired size (e.g., by grinding), before mixing the aerogel particles and the polymer material.

In some embodiments, solid polymer material is obtained in pre-ground form, or the polymer material is grinded, such that the polymer material is in the form of particles. In some embodiments, the polymer material is ground polymer material that resembles the consistency of sand. Aerogel particles of a desired size are mixed with the polymer material to form an aerogel/polymer mixture. The weight concentration of aerogel powder to polymer may be selected for the desired properties of the resultant fibers. For example, the aerogel powder may have a weight percentage of approximately 0.1% to 2.7% and the polymer may have a weight percentage of approximately 85% to 99.9%. In some embodiments, the aerogel particles and polymer material are mixed (by agitation such as, e.g., stirring or tumbling) in a container or a drum.

The aerogel/polymer mixture may then be extruded or otherwise formed into an intermediary product (e.g., as aerogel/polymer pellets) that can later be used to make fiber. In some embodiments (discussed in more detail below), this intermediary product may be referred to as a "master batch." In other embodiments, the aerogel/polymer mixture may be directly extruded into fiber. Where an intermediary product (e.g., aerogel/polymer pellets) is made, the intermediary product may optionally later be mixed with other material (e.g., other polymer material or other pellets that comprise a different aerogel loading, or no aerogel) so as to control and achieve a desired loading percent of aerogel in subsequently-formed fiber.

Embodiments of the inventive method comprise forming fiber, either directly from the aerogel/polymer mixture, or from the intermediary products (e.g., pellets), using appropriate textile fiber production methods, as are well known in the art. The textile fiber production method may include, for example, melt spinning, wet spinning, dry spinning, gel spinning, electro spinning, and the like as known in the art. For example, a mixture (e.g., the aerogel/polymer mixture, or a mixture containing the intermediary products - for example, a mixture comprising melted intermediary products and optionally one or more other materials) may be extruded through spinnerets to form continuous filaments. The continuous filaments may then be be manipulated by, for example, drawing, texturizing, crimping, and/or cutting, or another known method in the art, to form fibers in the most usable form for their final application. The continuous filaments may be cut to a specific length and packaged into a bale. The bale may then be sent, e.g., to a yarn spinner that processes the staple fibers into yarn (which could be further processed, e.g., for use in apparel like base layer garments).

Processing steps undertaken to form the synthetic fiber or articles comprising the synthetic fiber can differ depending on the fiber that is intended to be formed. For example, in some embodiments, the inventive process forms a continuous filament by, e.g., drawing, texturizing, and optionally adding one or more desired finish chemistries. In some embodiments, the method forms staple fibers by, e.g., drawing, cutting, optionally crimping, and optionally adding one or more desired finish chemistries. It is contemplated that any desired finish chemistries may be used in accordance with the invention. Finish chemistries are well known in the art and include, e.g., siliconization, durable water repellency treatment, etc.

The synthetic fiber may be incorporated into articles (e.g., end products), for example, garments, fabric, or insulation. In some embodiments, the articles or insulation according to the invention are better insulators than similar articles without the synthetic aerogel infused fibers. The articles made with the inventive synthetic fiber may have a thermal resistance of *R₁*, while articles made of only polymer fibers may have a thermal resistance of *R₂* and *R₁* may be greater than the *R₂*. Thus, the garments or insulation made according to certain embodiments of the inventive synthetic fiber have a greater thermal resistance than garments or insulation lacking the inventive synthetic fiber.

In some embodiments of the inventive method, the aerogel particles are introduced into a polymer material (e.g., a polypropylene resin), and, once mixed, the aerogel/polymer mixture may be extruded into pellets, which may be referred to as a "master batch". The master batch may be transferred to a manufacturer for extruding (e.g., melt blown spinning). The master batch may be used to produce fibers. In some embodiments, the master batch is used to produce a fibrous, non-woven batting of filaments. In some embodiments, the master batch may be combined with pellets of other formulations to produce a desired material for use in fibers according to embodiments of the invention..

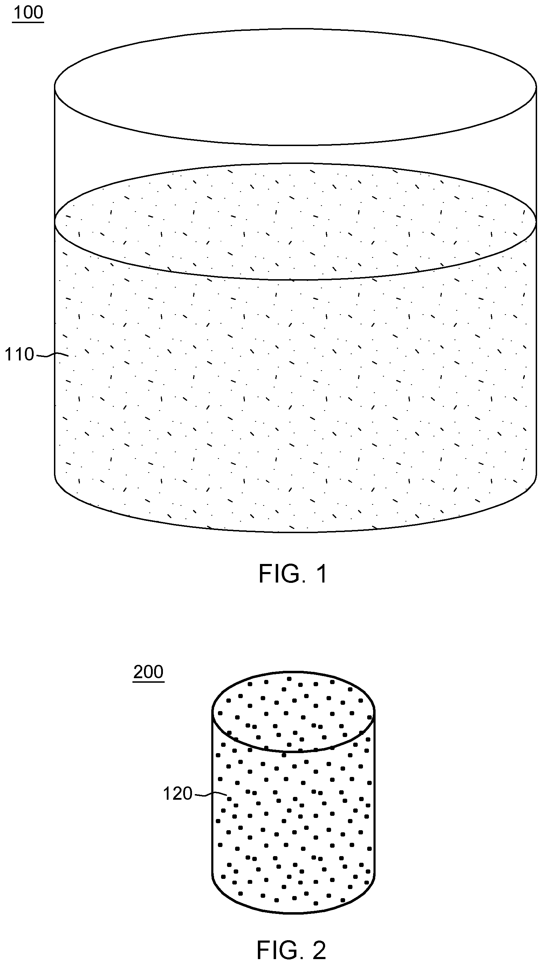

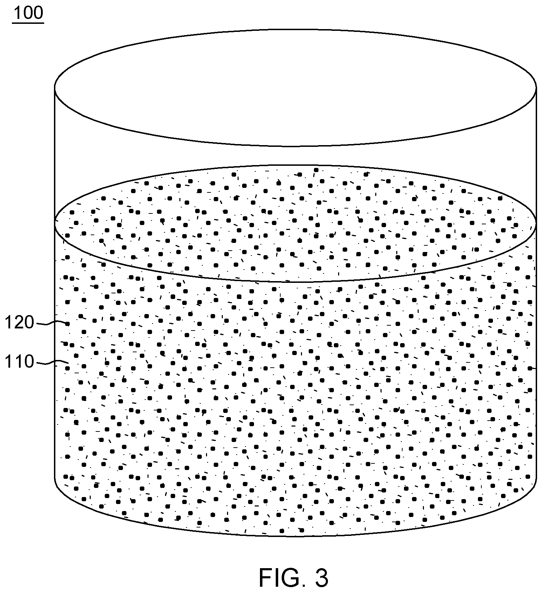

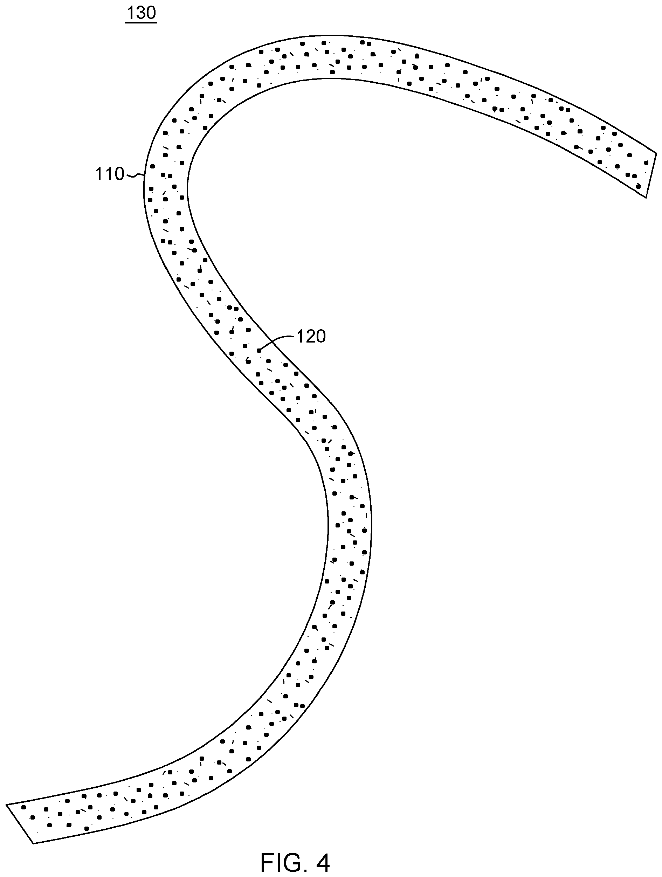

With reference to FIGS. 1-6, an embodiment of a method of mixing polymer material with aerogel particles, as described in greater detail above, is shown. The method includes obtaining a polymer material 110 (depicted within container 100 as shown in FIG. 1). The polymer material 110, which is in sand-like particle form, as it is formed by polyester pellets that are ground down to a sand-like consistency, is mixed with aerogel particles 120 (such as those shown in container 200 of FIG. 2) so as to form an aerogel/polymer mixture, as shown in FIG. 3, wherein the aerogel particles 120 are mixed within the polymer material 110. The mixture may be extruded into fiber 130 (which may be a filament or may be cut to staple fiber) or formed into pellets 140, as described in greater detail above and shown in FIGS. 4-6. Where the mixture is melt-extruded into pellets 140, the pellets may optionally be combined with additional pellets (to control aerogel loading), and may subsequently be extruded into fibers.

An embodiment of the inventive synthetic fiber 130 is illustrated in FIG. 4. As shown, the polymer material 110 of the synthetic fiber 130 contains a plurality of aerogel particles 120 dispersed throughout the polymer material 110. The aerogel particles 120 may be homogeneously distributed throughout the polymer material 110. Although FIG. 4 shows the aerogel particles 120 completely embedded into the polymer material 110, it is also contemplated that in some instances the aerogel particles 120 may be only at least partially embedded into the polymer material 110. The weight percentage of aerogel particles 120 dispersed throughout the polymer material 110 will be dependent upon the desired thermal insulating properties of the resultant synthetic fiber 130.

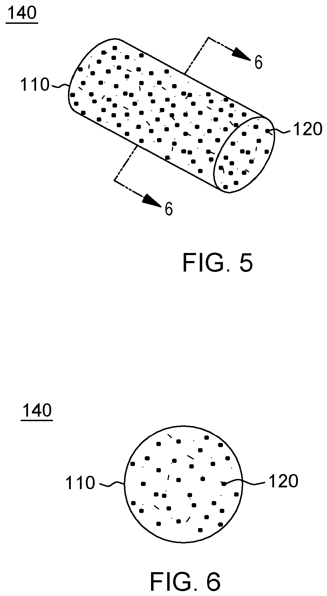

The pellets containing aerogel/polymer mixture 140, are illustrated in FIGS. 5 and 6. As shown, the pellets 140 contain a plurality of aerogel particles 120 dispersed throughout the polymer material 110. The aerogel particles 120 may be homogeneously distributed throughout the polymer material 110, as shown in FIG. 6. Although FIGS. 5 and 6 show the aerogel particles 120 completely embedded into the polymer material 110, it is also contemplated that in some instances the aerogel particles 120 may be only at least partially embedded into the polymer material 110 in some locations of the pellets 140. The weight percentage of aerogel particles 120 dispersed throughout the polymer material 110 will be dependent upon the desired thermal insulating properties of the resultant fiber or insulation made from the pellets 140.

### EXAMPLES

The invention will now be illustrated, but not limited, by reference to the specific embodiment described in the following examples.

### Example 1

An aerogel/polymer mixture is prepared by mixing the following:
- 0.1% by weight silica aerogel particles (ranging from 0.6 - 11 µm, with an average diameter of 3.5 µm); and
- 99.9% by weight polyethylene terephthalate

After being mixed/blended, the aerogel/polymer mixture is then extruded into pellets, which are subsequently mixed with polyester pellets. The pellet mix is later heated and extruded through a spinning method, for example spinnerets, to form continuous filaments. Once the continuous filaments are formed, they may be drawn, crimped, and/or cut to a specific length to form staple fibers which are then packaged into bale. Next, the bale may be sent to a yarn spinner for the staple fibers to be processed into yarns. The yarns may then be used downstream to create an article, such as, apparel and industrial fabrics. The yarns and insulation made from the synthetic fiber containing the polymer material and aerogel particles allow for fabrics and articles that are more insulative than fabrics and articles made from only polymer fibers that do not comprise aerogel particles.

### Comparative Example 2

An aerogel/polymer mixture is prepared by mixing the following:
- 6.1% by weight silica aerogel particles; and
- 93.9% by weight polyester material.

The density of the aerogel particles is approximately 0.09 g/cc and the density of the polyester material is approximately 1.38 g/cc. Thus, the mixture of 6.1% by weight silica aerogel particles and 93.9% by weight polyester will result in a concentration of approximately 50% aerogel particles to 50% polyester ratio by volume.

After being mixed/blended, the aerogel/polymer mixture is then extruded into pellets, which are subsequently mixed with polyester pellets. The pellet mix is later heated and extruded through a spinning method, for example spinnerets, to form continuous filaments. Once the continuous filaments are formed, they may be drawn, crimped, and/or cut to a specific length to form staple fibers which are then packaged into bale. Next, the bale may be sent to a yarn spinner for the staple fibers to be processed into yarns. The yarns may then be used downstream to create an article, such as, apparel and industrial fabrics. The yarns and insulation made from the synthetic fiber containing the polymer material and aerogel particles allow for fabrics and articles that are more insulative than fabrics and articles made from only polymer fibers that do not comprise aerogel particles.

### Example 3

A mixture of polypropylene resin and aerogel particles is prepared by mixing the following:
- 0.1% by weight silica aerogel particles; and
- 99.9% by weight polypropylene resin as polymer material.

After being mixed or blended, the mixture of polypropylene resin and aerogel powder is then extruded into pellets to form a master batch. The master batch may then be transferred to a manufacturer for melt blown spinning. The master batch may be used to produce a fibrous, non-woven batting of filaments. Alternatively, the master batch may be combined with pellets of other formulations to produce a fibrous, non-woven batting of filaments.

### Comparative Example 4

A mixture of polypropylene resin and aerogel powder is prepared by mixing the following:
- 6.2% by weight silica aerogel particles; and
- 93.8% by weight polypropylene resin.

The density of the aerogel particles is approximately 0.09 g/cc and the density of the polypropylene resin is approximately 0.913 g/cc. Thus, the mixture of 6.2% by weight silica aerogel powder and 93.8% by weight polypropylene resin will result in a concentration of approximately 40% aerogel powder to 60% polypropylene resin ratio by volume.

After being mixed or blended, the mixture of polypropylene resin and aerogel powder is then extruded into pellets to form a master batch. The master batch may then be transferred to a manufacturer for melt blown spinning. The master batch may be used to produce a fibrous, non-woven batting of filaments. Alternatively, the master batch may be combined with pellets of other formulations to produce a fibrous, non-woven batting of filaments. The filaments may have better thermal insulating properties when compared to similar materials without the aerogel powder.

### Comparative Example 5

An aerogel/polymer mixture is prepared by mixing the following:
- 4.2% by weight silica aerogel particles; and
- 95.8% by weight polyester material.

After being mixed/blended, the aerogel/polymer mixture is then extruded into pellets, which are subsequently mixed with polyester pellets. The pellet mix is later heated and extruded through a spinning method, for example spinnerets, to form continuous filaments. Once the continuous filaments are formed, they may be drawn, crimped, and/or cut to a specific length to form staple fibers which are then packaged into bale. Next, the bale may be sent to a yarn spinner for the staple fibers to be processed into yarns. The yarns may then be used downstream to create an article, such as, apparel and industrial fabrics. The yarns and insulation made from the synthetic fiber containing the polymer material and aerogel particles allow for fabrics and articles that are more insulative than fabrics and articles made from only polymer fibers that do not comprise aerogel particles.

The density of the aerogel particles is approximately 0.09 g/cc and the density of the polyester material is approximately 1.38 g/cc. Thus, the mixture of 4.2% by weight silica aerogel particles and 95.8% by weight polyester will result in a concentration of approximately 40% aerogel particles to 60% polyester ratio by volume.

### Example 6 - Comparative Testing

**Specimen A (According to the Invention)** Nonwoven, lofted batted insulation (batting) weighing 60 g/m² (1.77 ounces per square yard) is formed from the following fiber mixture:
- 30 wt% siliconized 1.4 denier aerogel polyester fibers (10.1 vol.% aerogel, 89.9 vol.% polyester);
- 25 wt% dry (non-siliconized) 1.4 denier aerogel polyester fibers (10.1 vol.% aerogel, 89.9 vol.% polyester);
- 25 wt% siliconized micro-denier polyester fibers; and
- 20 wt % dry (non-siliconized) macro-denier polyester fibers

### Specimen B (Counterexample)

Nonwoven, lofted batted insulation (batting) weighing 60 g/m² (1.77 ounces per square yard) is formed in the same manner as Specimen A, but from the following fiber mixture:
- 55 wt% siliconized micro-denier denier polyester fibers
- 35 wt % dry (non-siliconized) macro-denier polyester fibers
- 10 wt % siliconized macro-denier polyester fibers

The thermal performance of the battings of Specimen A and Specimen B are tested according to ISO 11092, and it is determined that Specimen B has a Clo of 0.027 (0.92 clo/oz/yd², 1 clo/oz/yd² = 0.0295 clo/g/m²) and Specimen A has a Clo of 0.034 clo/g/m² (1.16 clo/oz/yd², 1 clo/oz/yd² = 0.0295 clo/g/m²). Thus, the inventive embodiment of Specimen A unexpectedly demonstrates a 26% increase in thermal performance over Specimen B. This is particularly surprising because micro-denier fibers are known to contribute to a sample's thermal properties. Thus, since Specimen A contains fewer micro-denier fibers than Specimen B, a skilled artisan would expect its thermal performance to be comparatively inferior to Specimen B. Quite to the contrary though, Specimen A outperformed Specimen B in terms of Clo by 26%.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), "contain" (and any form contain, such as "contains" and "containing"), and any other grammatical variant thereof, are open-ended linking verbs. As a result, a method or article that "comprises", "has", "includes" or "contains" one or more steps or elements possesses those one or more steps or elements, but is not limited to possessing only those one or more steps or elements. Likewise, a step of a method or an element of an article that "comprises", "has", "includes" or "contains" one or more features possesses those one or more features, but is not limited to possessing only those one or more features.

As used herein, the terms "comprising," "has," "including," "containing," and other grammatical variants thereof encompass the terms "consisting of' and "consisting essentially of."

The phrase "consisting essentially of' or grammatical variants thereof when used herein are to be taken as specifying the stated features, integers, steps or components but do not preclude the addition of one or more additional features, integers, steps, components or groups thereof but only if the additional features, integers, steps, components or groups thereof do not materially alter the basic and novel characteristics of the claimed compositions or methods.

Where one or more ranges are referred to throughout this specification, each range is intended to be a shorthand format for presenting information, where the range is understood to encompass each discrete point within the range as if the same were fully set forth herein.

## Claims

1. A synthetic fiber comprising a mixture containing:
- 0.1 to 2.7 wt % aerogel particles, said aerogel particles having an average diameter of 1 to 12 µm; and
- 85 to 99.9 wt % polymer material,
wherein the synthetic fiber has a denier of 0.1 to 9.0.

2. The synthetic fiber according to claim 1, wherein the aerogel particles comprise inorganic aerogel, advantageously silica aerogel.

3. The synthetic fiber according to any one of claims 1 to 2, wherein the synthetic fiber is siliconized.

4. The synthetic fiber according to any one of claims 1 to 3, comprising 0.5 to 2.6 wt %, advantageously 1 to 2.5 wt %, of the aerogel particles.

5. The synthetic fiber according to any one of claims 1 to 4, wherein the aerogel particles have an average diameter of 2 to 5 µm.

6. The synthetic fiber according to any one of claims 1 to 5, wherein the aerogel particles are homogenously dispersed within the polymer material.

7. The synthetic fiber according to any one of claims 1 to 6, wherein the polymer material comprises nylon, polyester, acrylic or polyolefin polymer, or a combination thereof, advantageously polyester, preferably polyethylene terephthalate.

8. The synthetic fiber according to any one of claims 1 to 7, having a denier of 0.7 to 2.0.

9. The synthetic fiber according to any one of claims 1 to 8, wherein the fiber is a staple fiber having a length of 5 to 120 mm, advantageously 8 to 85 mm.

10. The synthetic fiber according to claim 9, wherein the fiber is crimped.

11. The synthetic fiber according to any one of claims 1 to 8, wherein the fiber is a filament.

12. Batting, insulation material, or yarn comprising the synthetic fiber according to any one of claims 1 to 11.

13. An article comprising the synthetic fiber according to any one of claims 1 to 11, said article being advantageously selected from the group consisting of an outerwear product, footwear, clothing, a sleeping bag, and bedding.

14. A method of making the synthetic fiber according to any one of claims 1 to 11, said method comprising:
- mixing the aerogel particles and the polymer material, thereby forming an aerogel/polymer mixture, advantageously both the aerogel particles and the polymer material being dry;
- extruding the aerogel/polymer mixture, advantageously by subjecting a dry aerogel/polymer mixture to a melt extrusion process, thereby forming an aerogel/polymer pellet; and
- optionally performing one or more additional processing steps, thereby forming the synthetic fiber.

15. The method according to claim 14, wherein said additional processing steps comprise forming the synthetic fiber from the aerogel/polymer pellet, advantageously by extrusion.

## Patentansprüche

1. Eine synthetische Faser, die eine Mischung enthält, die umfasst:
- 0,1 bis 2,7 Gew.-% Aerogelteilchen, wobei diese Aerogelteilchen einen durchschnittlichen Durchmesser von 1 bis 12 µm haben; und
- 85 bis 99,9 Gew.-% Polymermaterial, wobei die synthetische Faser einen Denier-Wert von 0.1 bis 9.0 hat.

2. Synthetische Faser nach Anspruch 1, wobei die Aerogelteilchen anorganisches Aerogel enthält, vorteilhafterweise Kieselerde-Aerogel.

3. Synthetische Faser nach einem der Ansprüche 1 bis 2, wobei die synthetische Faser silikonisiert ist.

4. Synthetische Faser nach einem der Ansprüche 1 bis 3, die 0,5 bis 2,6 Gew.-% , vorteilhafterweise 1 bis 2,5 Gew.-% Aerogelteilchen enthält.

5. Synthetische Faser nach einem der Ansprüche 1 bis 4, wobei die Aerogelteilchen einen durchschnittlichen Durchmesser von 2 bis 5 µm haben.

6. Synthetische Faser nach einem der Ansprüche 1 bis 5, wobei die Aerogelteilchen homogen innerhalb des Polymermaterials verteilt sind.

7. Synthetische Faser nach einem der Ansprüche 1 bis 6, wobei das Polymermaterial Nylon, Polyester, Acryl- oder Polyolefin-Polymer, oder eine Kombination daraus enthält, vorzugsweise Polyester, besser noch Polyethylen-Terephthalat.

8. Synthetische Faser nach einem der Ansprüche 1 bis 7, mit einem Denier-Wert von 0,7 bis 2,0.

9. Synthetische Faser nach einem der Ansprüche 1 bis 8, wobei es sich bei der Faser um eine Stapelfaser mit einer Länge von 5 bis 120 mm handelt, vorteilhafterweise 8 bis 85 mm.

10. Synthetische Faser nach Anspruch 9, wobei die Faser gekräuselt ist.

11. Synthetische Faser nach einem der Ansprüche 1 bis 8, wobei die Faser ein Filament ist.

12. Füllstoff, Isoliermaterial oder Garn, die die synthetische Faser nach einem der Ansprüche 1 bis 11 enthalten.

13. Ein Artikel, der die synthetische Faser nach einem der Ansprüche 1 bis 11 enthält, wobei dieser Artikel vorteilhafterweise aus der Gruppe ausgewählt wird, die aus Oberbekleidung, Fußbekleidung, Kleidung, Schlafsäcke und Bettwaren besteht.

14. Verfahren zur Herstellung der synthetischen Faser nach einem der Ansprüche 1 bis 11, wobei das Verfahren umfasst:
- Vermischen der Aerogelteilchen und des Polymermaterials, wodurch sich eine Aerogel/Polymermischung bildet, wobei vorteilhafterweise sowohl die Aerogelteilchen wie das Polymermaterial trocken sind;
- Extrusion der Aerogel/Polymermischung, vorteilhafterweise indem eine Aerogel/Polymermischung einem Schmelzextrusionsverfahren ausgesetzt wird, um Aerogel/Polymerpellets herzustellen; und
- als Option Ausführung eines oder mehrerer zusätzlicher Verfahrensschritte, wodurch die synthetische Faser gebildet wird.

15. Verfahren nach Anspruch 14, wobei diese Verfahrensschritte die Bildung der synthetischen Faser aus dem Aerogel/Polymerpellet enthalten, vorteilhafterweise durch Extrusion.

## Revendications

1. Fibre synthétique comprenant un mélange contenant :
- 0,1 à 2,7 % en poids de particules d'aérogel, lesdites particules d'aérogel présentant un diamètre moyen de 1 à 12 µm ; et
- 85 à 99,9 % en poids d'un matériau polymère,
dans laquelle la fibre synthétique présente un denier de 0,1 à 9,0.

2. Fibre synthétique selon la revendication 1, dans laquelle les particules d'aérogel comprennent un aérogel inorganique, avantageusement un aérogel de silice.

3. Fibre synthétique selon l'une quelconque des revendications 1 à 2, dans lequel ladite fibre synthétique est siliconée.

4. Fibre synthétique selon l'une quelconque des revendications 1 à 3, comprenant 0,5 à 2,6 % en poids, avantageusement 1 à 2,5 % en poids, des particules d'aérogel.

5. Fibre synthétique selon l'une quelconque des revendications 1 à 4, dans laquelle les particules d'aérogel présentent un diamètre moyen de 2 à 5 µm.

6. Fibre synthétique selon l'une quelconque des revendications 1 à 5, dans laquelle les particules d'aérogel sont dispersées de manière homogène dans le matériau polymère.

7. Fibre synthétique selon l'une quelconque des revendications 1 à 6, dans laquelle le matériau polymère comprend du nylon, du polyester, un polymère acrylique ou polyoléfinique, ou une combinaison de ceux-ci, avantageusement du polyester, de préférence du polyéthylène téréphtalate.

8. Fibre synthétique selon l'une quelconque des revendications 1 à 7, présentant un denier de 0,7 à 2,0.

9. Fibre synthétique selon l'une quelconque des revendications 1 à 8, dans laquelle la fibre est une fibre discontinue présentant une longueur de 5 à 120 mm, avantageusement de 8 à 85 mm.

10. Fibre synthétique selon la revendication 9, dans laquelle la fibre est crêtée.

11. Fibre synthétique selon l'une quelconque des revendications 1 à 8, dans laquelle fibre est un filament.

12. Nappe ouatée, matériau d'isolation, ou fil comprenant la fibre synthétique selon l'une quelconque des revendications 1 à 11.

13. Article comprenant la fibre synthétique selon l'une quelconque des revendications 1 à 11, ledit article étant avantageusement choisi dans le groupe constitué d'un produit de vêtement d'extérieur, d'une chaussure, d'un vêtement, d'un sac de couchage et d'un matelas.

14. Procédé de fabrication de la fibre synthétique selon l'une quelconque des revendications 1 à 11, ledit procédé comprenant les étapes consistant à :
- mélanger les particules d'aérogel et le matériau polymère, en formant ainsi un mélange aérogel/polymère, avantageusement à la fois les particules d'aérogel et le matériau polymère étant secs ;
- extruder le mélange aérogel/polymère, avantageusement en soumettant un mélange aérogel/polymère sec à un processus d'extrusion à l'état fondu, en formant ainsi une pastille d'aérogel/polymère ; et
- réaliser facultativement une ou plusieurs étapes de traitement supplémentaires, en formant ainsi la fibre synthétique.

15. Procédé selon la revendication 14, dans lequel lesdites étapes de traitement supplémentaires comprennent la formation de la fibre synthétique à partir de la pastille d'aérogel/polymère, avantageusement par extrusion.
